**Europäisches Patentamt**

**European Patent Office**

**Office européen des brevets**

(19)

(11) Veröffentlichungsnummer: **0 164 529**
**B1**

(12) # EUROPÄISCHE PATENTSCHRIFT

(45) Veröffentlichungstag der Patentschrift:
04.11.87

(21) Anmeldenummer: 85104657.3

(22) Anmeldetag: 17.04.85

(51) Int. Cl.⁴: **F 16 K 11/07, F 16 K 27/04**

(54) **Wegeventil.**

(30) Priorität: 30.05.84 DE 3420127

(43) Veröffentlichungstag der Anmeldung:
18.12.85 Patentblatt 85/51

(45) Bekanntmachung des Hinweises auf die Patenterteilung:
04.11.87 Patentblatt 87/45

(84) Benannte Vertragsstaaten:
DE FR GB IT

(56) Entgegenhaltungen:
FR-A-2 035 282
FR-A-2 072 357
FR-A-2 329 884
US-A-3 246 665

(73) Patentinhaber: ROBERT BOSCH GMBH, Postfach
50, D-7000 Stuttgart 1 (DE)

(72) Erfinder: Frötschl, Erwin, Kirchstrasse 22/1, D-7014
Kornwestheim (DE)

LIBER, STOCKHOLM 1987

EP 0 164 529 B1

## Beschreibung

### Stand der Technik

Die Erfindung geht aus von einem Wegeventil nach der Gattung des Hauptanspruchs. Bei einem derartigen bekannten Wegeventil ist der Steuerschieber in Bohrungen von Führungsscheiben geführt. Diese haben am Außenumfang eine glatte Oberfläche und sind im Ventilgehäuse eingeklebt. Dadurch ist die notwendige Klebstoffmenge nur schwer zu dosieren. Überschüssiger Klebstoff kann an die Laufflächen des Steuerschiebers oder an die in den Führungsscheiben angeordneten Dichtringe gelangen. Die Gleitfähigkeit des Steuerschiebers wird dadurch beeinträchtigt.

Aus der Druckschrift FR-A-2 329 884 ist es bekannt, bei einem zu verbindenden Teil eine Ringnut vorzusehen und im zweiten Teil eine Einfüll- und eine Entlüftungsöffnung auszubilden. Durch die Einfüllöffnung wird in die Ringnut ein Kleber eingefüllt. Die Luft kann über die Entlüftungsöffnung entweichen. Dabei ist es aber nur schwer möglich, die beiden Teile genau zueinander zu zentrieren und bereits bei der Montage geringfügig zu befestigen. Insbesondere während des Aushärtens des Klebers können die Teile gegeneinander verrutschen.

Ferner wird in der Druckschrift FR-A-2 035 282 der Einbau einer Hülse in ein Wegeventil beschrieben. Hierzu wird ein zusätzliches Absperrglied in die Hülse eingeführt. Anschließend wird der Klebstoff durch die Schieberbohrung in den Raum zwischen der Hülse und der Schieberbohrungswand eingepreßt. Das hier vorgeschlagene Klebeverfahren eignet sich aber nicht zum Einbau von Führungsscheiben bei Wegeventilen.

### Vorteile der Erfindung

Das erfindungsgemäße Wegeventil mit den kennzeichnenden Merkmalen des Hauptanspruchs hat demgegenüber den Vorteil, daß bereits vor dem Verkleben und während des Aushärtens des Klebstoffs die Führungsscheiben fest in der Schieberbohrung angeordnet sind. Die Montagezeit wird dadurch verkürzt. Die Klebstoffmenge ist genau dosierbar, wobei die Festigkeit durch Luftblasen nicht verringert wird. Die Kolbenlaufflächen und die Dichtringe sind frei von Klebstoff.

Durch die in den Unteransprüchen aufgeführten Maßnahmen sind vorteilhafte Weiterbildungen und Verbesserungen der im Hauptanspruch angegebenen Merkmale möglich.

### Zeichnung

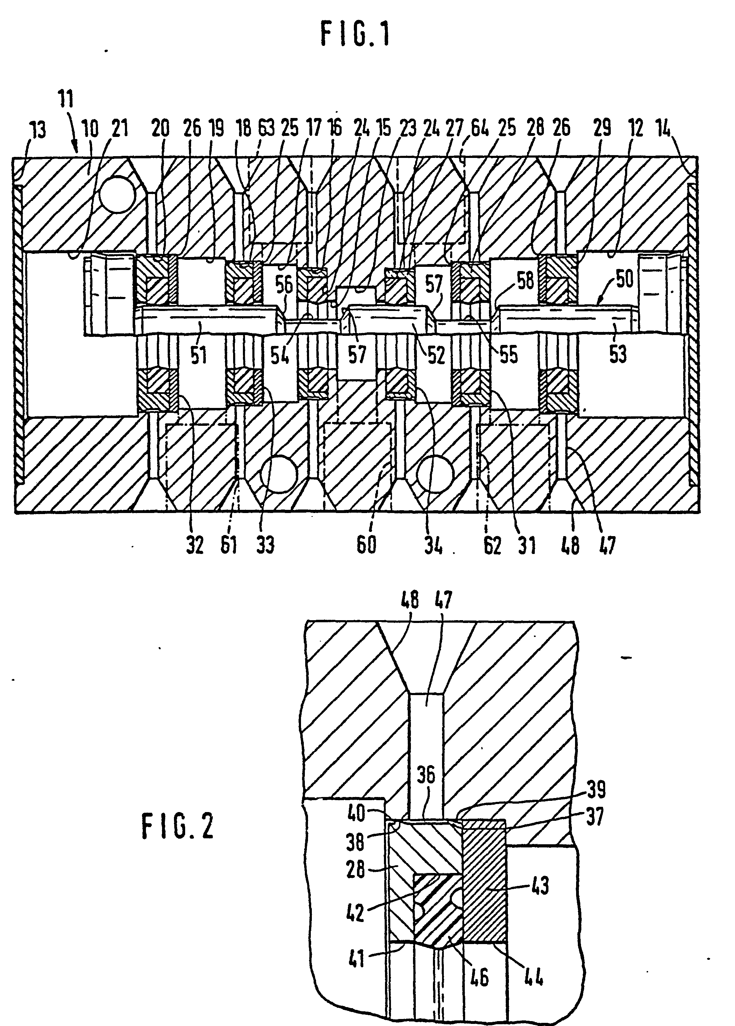

Ein Ausführungsbeispiel der Erfindung ist in der Zeichnung dargestellt und in der nachfolgenden Beschreibung näher erläutert. Es zeigen Figur 1 einen Längsschnitt durch ein Wegeventil und Figur 2 eine Einzelheit.

### Beschreibung des Ausführungsbeispiels

Im Gehäuse 10 eines 5/2-Wegeventils 11, das als Druckluftventil eingesetzt wird, ist eine mittige, durchgehende Stufenbohrung 12 ausgebildet. Diese ist von beiden Stirnseiten 13, 14 des Gehäuses 10 her jeweils sechsfach abgesetzt. Sie hat einen mittigen Abschnitt 15 mit dem kleinsten Durchmesser und zu beiden Seiten je sechs Abschnitte 16 bis 21 mit größer werdenden Durchmessern. Im Abschnitt 15 ist eine Ringnut ausgebildet, die als Zulaufkammer 23 dient. An der zwischen Abschnitt 15 und 16 gebildeten Schulter 24 und an jeder zweiten zur jeweiligen Stirnseite 13 bzw. 14 hin folgenden Schulter 25, 26 der Stufenbohrung 12 legen sich beiderseits des Abschnitts 15 Führungsscheiben 27, 28, 29 an. Die zwischen den Führungsscheiben 27, 28, 29 im Bereich der Abschnitte 17, 19 gebildeten Räume dienen als Steuerkammern 31, 32 und als Verbraucherkammern 33, 34.

Jede Führungsscheibe 27 bis 29 weist an ihrem Außenumfang - wie in Figur 2 näher gezeigt - eine Ringnut 36 auf. Dadurch entstehen Stege 37, 38, die auf einer Seite eine schräge Kante 39 und auf der anderen Seite eine senkrechte Kante 40 haben. Jede Führungsscheibe 27 bis 29 weist eine mittige, gleich große Bohrung 41 auf. In dieser Bohrung 41 ist eine zum Abschnitt 15 hin geöffnete Ausnehmung 42 ausgebildet. Diese Ausnehmung 42 ist bei den Führungsscheiben 28, 29 durch eine Stützscheibe 43 abgeschlossen, die denselben Außendurchmesser wie die Führungsscheiben 28, 29 und eine der Bohrung 41 entsprechende Bohrung 44 hat. In der Ausnehmung 42 ist ein Dichtring 46 angeordnet.

In den Abschnitten 16, 18, 20 der Stufenbohrung 12 ist von der Oberseite und von der Unterseite des Gehäuses 10 her je eine Querbohrung 47 mit einer trichterförmigen Öffnung 48 ausgebildet. Diese Bohrungen münden in die Ringnut 36 der Führungsscheiben 27, 28, 29.

In den Bohrungen 41 der Führungsscheiben 27, 28, 29 und in den Bohrungen 44 der Stützscheiben 43 ist ein Steuerschieber 50 gleitend geführt. Dieser weist drei Kolbenteile 51, 52, 53 auf, die durch Ringnuten 54, 55 getrennt sind. An den Kolbenteilen 51, 52, 53 befinden sich den Ringnuten 54, 55 zugewandte Steuerkanten 56, 57, 58.

Das Gehäuse 10 hat an seiner Unterseite einen Zulaufanschluß 60, der in Verbindung mit der Zulaufkammer 23 steht, und zwei mit den Steuerkammern 31, 32 verbundene Entlüftungsanschlüsse 61, 62. An der Oberseite des Gehäuses 10 sind zwei Verbraucheranschlüsse 63, 64 ausgebildet, die mit den Verbraucherkammern 33, 34 verbunden sind. Die Querbohrungen 47 sind in einer ersten Ebene ausgebildet, in der auch die Achse der Stufenbohrung 12 verläuft. In einer zweiten Ebene, die parallel zur ersten Ebene verläuft, befinden sich die Entlüftungsanschlüsse 61, 62 und in einer dritten, parallelen Ebene der Zulaufanschluß 60 und die Verbraucheranschlüsse 63, 64.

Die Funktionsweise des Wegeventils 11 ist hinreichend bekannt und deshalb hier nicht näher erläutert. Eingebaut werden die Führungsscheiben 27, 28, 29 nach folgendem Verfahren, das am Beispiel der Führungsscheibe 27 beschrieben ist.

Die Führungsscheibe 27 wird von der Stirnseite 13 bzw. 14 her in die Stufenbohrung 12 eingeführt und in die Abschnitte 16 eingepreßt. Die schräge Kante 39 der Stege 37, 38 verläuft dabei zum mittleren Abschnitt 15 hin, so daß die Führüngsscheibe 27 leicht in die Stufenbohrung 12 einführbar ist, aber in entgegengesetzter Richtung durch die senkrechte Kante 40 im Abschnitt 16 verklemmt. Durch das Einpressen schneiden die Stege 37, 38 leicht in den Abschnitt 16 ein und schließen somit die Ringnut 36 zur Stufenbohrung 12 hin dicht ab. Die Breite des Abschnitts 16 entspricht etwa der der Führungsscheibe 27. Dadurch braucht die Führungsscheibe 27 nur in den Abschnitt 16 eingepreßt zu werden, im übrigen Teil der Stufenbohrung 12 ist sie relativ leicht beweglich.

Über die Querbohrung 47 wird von einer Seite des Gehäuses 10, bevorzugt der Oberseite, Klebstoff in die Nut 36 eingefüllt, der sich dort rasch gleichmäßig verteilt und aushärtet. Die sich in der Ringnut 36 befindende Luft kann in vorteilhafter Weise über die Querbohrung 47 auf der anderen Seite abströmen.

**Patentansprüche**

1. Wegeventil (11), insbesondere für Druckluftbetrieb, mit einem Ventilgehäuse (10), in dessen Schieberbohrung (12) ein steuerschieber (50) angeordnet ist, der Druckmittel von wenigstens einer Zulaufkammer (23) zu mehreren Steuerkammern (31, 32) und mehreren Verbraucherkammern (33, 34) steuert und der in fluchtenden Bohrungen (41) von in die Schieberbohrung (12) gesetzten Führungsscheiben (27, 28, 29) geführt ist, dadurch gekennzeichnet, daß jede Führungsscheibe (27, 28, 29) an ihrem Außenumfang eine Ringnut (36) aufweist, daß im Ventilgehäuse (10) für jede Führungsscheibe (27, 28, 29) wenigstens eine in die Ringnut (36) mündende Bohrung (47) ausgebildet ist, in die Klebstoff eingefüllt wird, daß die durch die Ringnut (36) gebildeten und beiderseits derselben liegenden Stege (37, 38) eine schräge und eine senkrechte Kante (40) aufweisen daß die schrägen Kanten (39) dieselbe Neigungsrichtung haben und jeweils in Einführrichtung geneigt sind und daß der Außenumfang der Stege (37, 38) geringfügig größer ist als der jeweilige Durchmesser der Schieberbohrung (12).

2. Wegeventil nach Anspruch 1, dadurch gekennzeichnet, daß die Stege (37, 38) scharfkantig ausgebildet sind.

3. Wegeventil nach Anspruch 1 und/oder 2 dadurch gekennzeichnet, daß die Schieberbohrung (12) als mehrfach abgesetzte Stufenbohrung ausgebildet ist.

4. Wegeventil nach einem der Ansprüche 1 bis 4, dadurch gekennzeichnet, daß in den Führungsscheiben (27, 28, 29) je ein Dichtring (46) angeordnet ist.

5. Wegeventil nach einem der Ansprüche 1 bis 5, dadurch gekennzeichnet, daß die Führungsscheiben (28, 29) jeweils durch eine Stützscheibe (43) abgeschlossen sind.

**Claims**

Directional valve (11), in particular for compressed-air operation, with a valve housing (10), in the slider bore hole (12) of which a spool valve (50) is arranged, which controls pressure medium from at least one supply chamber (23) to a number of control chambers (31, 32) and a number of consumer chambers (33, 34) and is guided in aligned bore holes (41) by guide washers (27, 28, 29) fitted into the slider bore hole (12), characterized in that each guide washer (27, 28, 29) has on its outer periphery an annular groove (36), in that there is in the valve housing (10) for each guide washer (27, 28, 29) at least one bore hole (47) which opens out into the annular groove (36) and into which adhesive is filled, in that the webs (37, 38) formed by the annular groove (36) and lying on either side of the same have an inclined and a vertical edge (40), in that the inclined edges (39) have the same angle of inclination and are in each case inclined in the direction of introduction, and in that the outer periphery of the webs (37, 38) is slightly larger than the respective diameter of the slider bore hole (12).

2. Directional valve according to Claim 1, characterized in that the webs (37, 38) are of sharp-edged design.

3. Directional valve according to Claim 1 and/or 2, characterized in that the slider bore hole (12) is designed as a multiple-stepped bore hole.

4. Directional valve according to one of Claims 1 to 3, characterized in that there is a seal ring (46) arranged in each of the guide washers (27, 28, 29).

5. Directional valve according to one of Claims 1 to 4, characterized in that the guide washers (28, 29) are in each case sealed off by a back-up washer (43).

## Revendications

1. Vanne à voies multiples (11), notamment pour fonctionnement à l'air comprimé, comportant un carter de vanne (10), dans l'alésage (12) à coulissement duquel est monté un tiroir de distribution (50), qui dirige de l'agent sous pression à partir d'au moins une chambre d'entrée (23) sur plusieurs chambres de distribution (31, 32) et plusieurs chambres de réception (33, 34), et qui est guidé dans des alésages alignés (41) de disques de guidage (27, 28, 29) placés dans l'alésage (12) prévu pour le tiroir coulissant, vanne caractérisée en ce que chaque disque de guidage (27, 28, 29) comporte, sur son pourtour extérieur, une rainure annulaire (36), en ce que dans le carter (10) de la vanne, pour chaque disque de guidage (27, 28, 29) est constitué au moins un alésage (47) débouchant dans la rainure annulaire (36), dans laquelle est versée de la colle, en ce que les traverses (37, 38) formées par la rainure annulaire (36) et situées des deux côtés de celle-ci comportent un bord oblique (39) et un bord vertical (40), en ce que les bords obliques (39) présentent le même sens d'inclinaison et sont inclinés chaque fois dans la direction de l'entrée, et en ce que le pourtour extérieur des traverses (37, 38) est très légèrement supérieur au diamètre respectif de l'alésage (12) prévu pour le tiroir coulissant.

2. Vanne à voies multiples selon la revendication 1, caractérisée en ce que les traverses (37, 38) sont constituées avec des bords vifs.

3. Vanne à voies multiples selon la revendication 1 et/ou 2, caractérisée en ce que l'alésage (12) prévu pour le tiroir coulissant est constitué sous la forme d'alésage présentant des décalages multiples.

4. Vanne à voies multiples selon l'une des revendications 1 à 3, caractérisée en ce que, dans chacun des disques de guidage (27, 28, 29), est monté un anneau d'étanchéité (46).

5. Vanne à voies multiples selon l'une des revendications 1 à 4, caractérisée en ce que les disques de guidage (28, 29) sont obturés chaque fois par un disque d'appui (43).

# F I G.1

# F I G.2